# EUROPEAN PATENT SPECIFICATION

(11) **EP 0 493 038 B1**
(45) Date of publication and mention of the grant of the patent: **02.08.1995**
(21) Application number: 91311897.2
(22) Date of filing: 20.12.1991
(51) Int. Cl.: G03G 19/00

(54) **Method and apparatus for electrophotographic printing**
Verfahren und Vorrichtung zum elektrophotographischen Drucken
Procédé et dispositif pour l'impression électrophotographique

(30) Priority: 20.12.1990 US 630901; 20.12.1990 US 630907
(43) Date of publication of application: 01.07.1992
(73) Proprietor: XEROX CORPORATION, Rochester New York 14644 (US)
(72) Inventor: Abowitz, Gerald, Penfield, New York 14526 (US); Sullivan, William A., Webster, New York 14580 (JP); Bov, Raphael F., Jr., Pittsford, New York 14534 (JP); Eakin, Paul W., Webster., New York 14580 (JP); Smith, Wayne R., Pittsford, New York 14534 (JP)
(74) Representative: Goode, Ian Roy

(56) References cited:
- US-A- 4 581 283
- US-A- 4 728 984
- US-A- 4 780 742
- US-A- 4 901 114

## Description

The present invention relates generally to an electrophotographic printing apparatus, and more particularly relates to a method and an apparatus for the application of magnetic ink character recognition media to a substrate.

In general, the process of electrophotographic printing includes charging a photoconductive member to a substantially uniform potential to sensitize the surface thereof. The charged portion of the photoconductive surface is exposed to a modulated light beam, i.e., a laser beam, which may be utilized to discharge selected portions of the charged photoconductive surface to record the desired information thereon. In this way, an electrostatic latent image is recorded on the photoconductive surface which corresponds to the electrostatic latent image on the photoconductive member, and the latent image is developed by bringing developer material into contact therewith. Generally, developer material is comprised of toner particles adhering triboelectrically to carrier granules. The carrier granules are magnetic, while the toner particles may or may not contain small amounts of magnetic material encapsulated in a thermoplastic resin binder. The toner particles are electrostatically attracted from the carrier granules to a copy sheet. Alternatively, single component development could be used. Finally, the copy sheet is heated to permanently affix the toner image to the copy sheet.

Electrophotographic printing has been particularly useful in the commercial banking industry by reproducing cheques or financial documents with magnetic ink, i.e., by fusing magnetically loaded toner particles thereon. Each financial document has imprinted thereon encoded data in a magnetic ink character recognition (MICR) format. In addition, high speed processing of financial documents is simplified by imprinting magnetic ink bar codes in machine-readable form thereon. The repeated processing of the financial documents and the high speed sorting thereof is greatly simplified by the reading of the encoded data by an MICR reader. Thus, encoded information on financial documents may be imprinted thereon xerographically with magnetic ink or toner. The information reproduced on the copy sheet with the magnetic particles may be subsequently read due to its magnetic and optical characteristics. Hereinbefore, high speed electrophotographic printing machines have employed magnetic toner particles to develop the latent image. These toner particles have been subsequently transferred to the copy sheet and fused thereto. The resultant document may have variable or fixed magnetic data imprinted thereon in MICR format which is subsequently read by a MICR reader and processed. Thus while the utilization of magnetically encoded information on documents reproduced with magnetic particles is well known, the cost of using magnetic toner as the only developer in a printer is substantial since every copy going through the printer uses up magnetic toner whether the subsequent copy is to be read by an MICR reader or not. Therefore, ways are needed to reduce this cost.

For example, US-A-4,901,114 discloses an MICR toner used in combination with a non-MICR toner in a tri-level xerographic apparatus. Two distinct images are formed simultaneously on a photoreceptor, but are developed separately, one with MICR toner and the other with standard, non-MICR, toner. The combination of using MICR toner and standard toner enables one to print some parts of an image with MICR toner and the remainder with non-MICR toner. A heat sensitive magnetic transfer element for printing a magnetic image is disclosed in US-A-4,581,283. The magnetic transfer element includes a heat resisting foundation and a heat sensitive transferring layer. A means of transferring a magnetic image to a substrate is also shown. US-A-4,891,240 discloses a magnetic ink recognition coating system. The coating system includes means to provide a lubricant that is applied solely in the area where the MICR characters are printed. An electrophotographic printing machine is disclosed in US-A-4,563,086 where a magnetic toner image is transferred to a copy sheet. Electrophotographic printing is used for reproducing cheques or financial documents with magnetic ink by fusing magnetic toner particles thereon and US-A-4,114,032 is directed to a method of manufacturing documents to prevent forgeries thereof. The method comprises producing a base material, coating fibers with a magnetic or magnetizable material, and embedding the fibers into the base material.

Once the MICR image has been added to a negotiable instrument there is still concern in the financial document processing industry for security of negotiable documents. The advent of desktop publishing and non-impact MICR printers has created a new opportunity for fraud in the industry. A practical means of security has been proposed that includes adding color or texture to, for example, a check or other negotiable instrument. However, the problem with this approach is that the color is easily reproduced on a color copier or scraped off by hand and replaced with a closely similar color. A technique that is much harder to forge is in US-A-4,114,032 which discloses a method of manufacturing documents, such as, paper money, credit cards, identification cards and the like out of a fibrous material which is coated with magnetic or magnetizable material that is embedded in the binding agent.

An object of the present invention is to provide a lower cost and more efficient magnetic ink character recognition system.

Accordingly, the present invention provides a method of providing MICR images on a substrate having permanent non-magnetic, or substantially non-magnetic, images on a surface thereof, characterised by fusing a magnetic material on top of said non-magnetic, or substantially non-magnetic, images. A colored material may be fused on top of said images.

The invention also provides an apparatus for creating images readable by a MICR reader-sorter, characterised by a first substrate having a coating layer comprising a heat releasable magnetic material and optionally a colored, highly reflective material attached thereto, and fuser means for heating and pressing said coating layer onto permanent non-magnetic, or substantially non-magnetic, toned images of a second separate substrate in order to thereby cause said coating layer to fuse to said permanent non-magnetic, or substantially non-magnetic, images of said second substrate and thereby render the resultant images readable by a MICR reader-sorter.

In accordance with one embodiment of the present invention, there is provided an electrophotographic printing machine of the type in which a non-magnetic toner image is transferred to a copy sheet from a photoconductive member and fused thereto. The toner image may be slightly magnetic, if desired. Means are provided for the production of magnetic characters from a thin film comprising a magnetic medium and optionally also a colored medium by utilizing a heater member to selectively apply the durable magnetic medium only to those fused images of the copy sheet that are intended to be read by a magnetic ink character recognition reader. The embodiment of durability enhancing resins, color and opacity of the present invention serves to lower infield reader/sorter reject rates beyond that achieved by present magnetic toner systems.

The present invention will be described further, by way of example, with reference to the accompanying drawings, in which:-
Figure 1 is a schematic elevational view showing an electrophotographic copier employing the features of an aspect of the present invention;
Figure 2 shows a side view of the device employed in Figure 1 in the process of placing a magnetic overcoating onto non-magnetic or substantially non-magnetic toner as is part of the present invention; and
Figure 3 shows a side view of the magnetizing device of the present invention employed in Figure 1 in the process of placing a colored and magnetic overcoating onto non-magnetic toner as is part of the present invention.

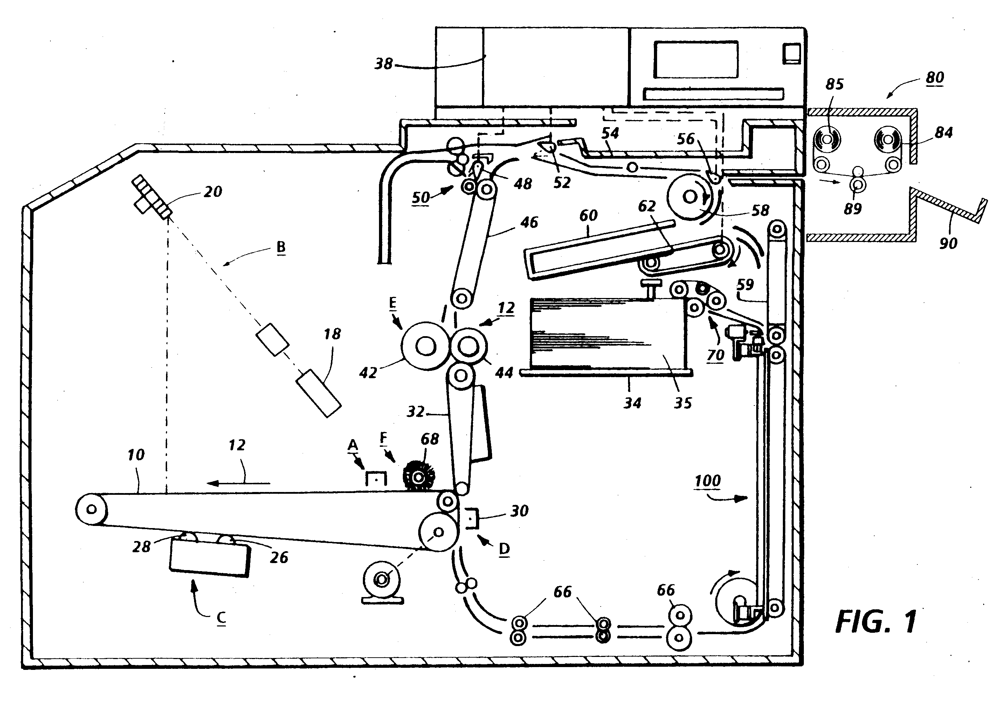

For a general understanding of the features of an embodiment of the present invention, reference is made to the drawings. In the drawings, like reference numerals have been used throughout to designate identical elements. Figure 1 schematically depicts the various components of an illustrative electrophotographic printing machine incorporating the improved method and apparatus for creating MICR readable images by applying magnetic media to non-magnetic toner.

Inasmuch as the an of electrophotographic printing is well known, the various processing stations employed in the Figure 1 printing machine will be shown hereinafter schematically and their operation described briefly with reference thereto.

As shown in Figure 1, the illustrative electrophotographic printing machine employs a belt 10 having a photoconductive surface thereon. Preferably, the photoconductive surface is made from selenium or an amorphous silicon organic photoconductive surface could be used. Belt 10 moves in the direction of arrow 12 to advance successive portions of the photoconductive surface through the various processing stations disposed about the path of movement thereof.

Initially, a portion of the photoconductive surface passes through charging station A. At charging station A, a corona generating device charges the photoconductive surface to a relatively high substantially uniform potential.

Next, the charged portion of the photoconductive surface is advanced through imaging station B. At imaging station B, a laser 18, on command from a computer and through the use of a reflective polygon 20, images the photoconductive surface as disclosed in U.S. Patent 4,782,363. This records an electrostatic latent image on the photoconductive surface which corresponds to the computer generated information. Thereafter, the belt 10 advances the electrostatic latent image recorded on the photoconductive surface to a development station C.

With continued reference to Figure 1, at development station C, a pair of magnetic brush developer rollers, indicated generally by the reference numerals 26 and 28, advance a standard non-magnetic developer material into contact with the electrostatic latent image. The latent image attracts toner particles from the carrier granules of the developer material to form a toner powder image on the photoconductive surface of belt 10.

After the electrostatic latent image recorded on the photoconductive surface of belt 10 is developed, belt 10 advances the toner powder image to a transfer station D. At transfer station D, a copy sheet is moved into contact with the toner powder image. Transfer station D includes a corona generating device 30 which sprays ions onto the backside of the copy sheet. This attracts the toner powder image from the photoconductive surface of the belt 10 to the sheet. After transfer, a conveyor 32 advances the sheet to a fusing station E.

The copy sheets 35 are fed from a tray 34 by top feeder 70 to the transfer station D. The tray 34 has means for sensing the size of the copy sheets and the sensing means controls the sending of an electrical signal indicative thereof to a microprocessor within a controller 38. Similarly, the holding tray of document handling unit includes switches thereon which detect the size of the original document and generate an electrical signal indicative thereof which is transmitted also to a microprocessor controller 38.

Fusing station E includes a fuser assembly which permanently affixes the transferred powder image to the copy sheet. Preferably, the fuser assembly includes a heated fuser roller 42 and backup roller 44. The sheet passes between fuser roller 42 and backup roller 44 with the powder image contacting fuser roller 42. In this manner, the powder image is permanently affixed to the sheet.

After fusing, conveyor 46 transports the sheets to gate 48 which functions as an inverter selector. Depending upon the position of gate 48, the copy sheets will either be deflected into a sheet inverter 50 or bypass sheet inverter 50 and be fed directly onto a second decision gate 52. Thus, copy sheets which bypass inverter 50 turn a 90° corner in the sheet path before reaching gate 52. Gate 48 directs the sheets into a face up orientation so that the imaged side which has been transferred and fused is face up. If inverter path 50 is selected, the opposite is true, i.e., the last printed face is facedown. Second decision gate 52 deflects the sheet directly into an output tray 54 or deflects the sheet into a transport path which carries it on without inversion to a third decision gate 56. Gate 56 either passes the sheets directly on without inversion into the output path of the copier, or deflects the sheets into a duplex inverter roll transport 58. Inverting transport 58 inverts and stacks the sheets to be duplexed in a duplex tray 60 when gate 56 so directs. Duplex tray 60 provides intermediate or buffer storage for those sheets which have been printed on one side and on which an image will be subsequently printed on the side opposed thereto, i.e., the copy sheets being duplexed. Due to the sheet inverting by rollers 58, these buffer set sheets are stacked in duplex tray 60 facedown. They are stacked in duplex tray 60 on top of one another in the order in which they are copied.

In order to complete duplex copying, the previously simplexed sheets in tray 60 are fed to conveyor 59 seriatim by bottom feeder 62 back to transfer station D for transfer of the toner powder image to the opposed side of the sheet. Conveyors 100 and 66 advance the sheet along a path which produces an inversion thereof. However, inasmuch as the bottommost sheet is fed from duplex tray 60, the proper or clean side of the copy sheet is positioned in contact with belt 10 at transfer station D so that the toner powder image thereon is transferred thereto. The duplex sheets are then fed through the same path as the previously simplexed sheets to be stacked in tray 54 for subsequent removal by the printing machine operator.

Returning now to the operation of the printing machine, invariably after the copy sheet is separated from the photoconductive surface of belt 10, some residual particles remain adhering to belt 10. These residual particles are removed from the photoconductive surface thereof at a cleaning station F. Cleaning station F includes a rotatably mounted fibrous brush 68 in contact with photoconductive surface of belt 10. These particles are cleaned from the photoconductive surface of belt 10 by the rotation of brush 68 in contact therewith. Subsequent to cleaning, a discharge lamp (not shown) floods the photoconductive surface with light to dissipate any residual electrostatic charge remaining thereon prior to the charging thereof for the next successive imaging cycle.

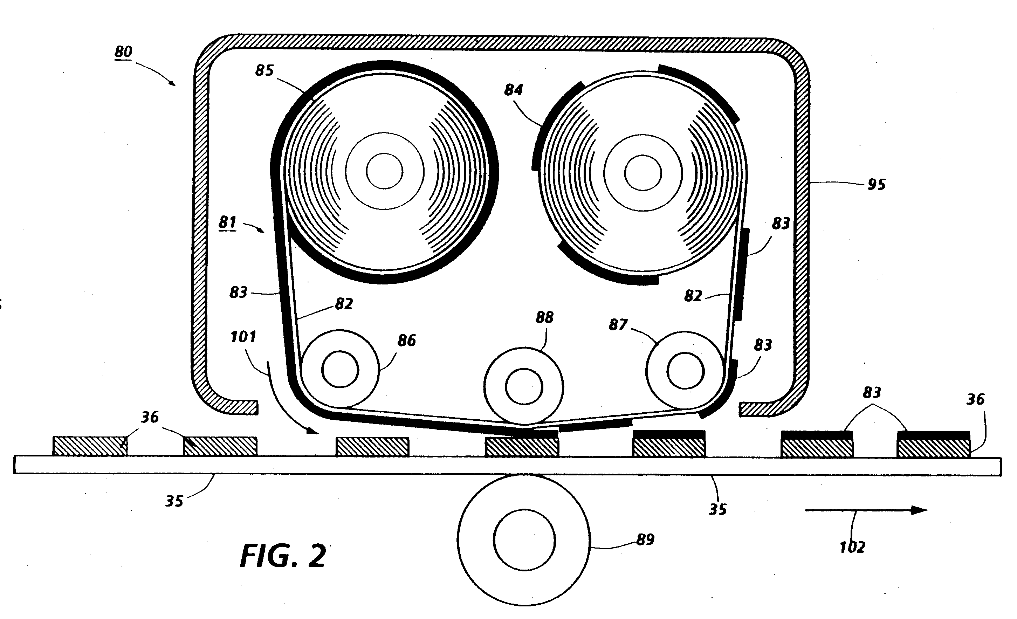

Turning now to an embodiment of the present invention, and in reference to Figures 1 and 2, magnetic material applicator 80 is positioned to apply a magnetic material to selected parts of sheets 35. When these sheets contain, for example, cheques with four (4) on each sheet, the numbers or code along the bottom of any sheet are overcoated with a magnetic material as shown in Figure 2 which makes the codes machine-readable. The cheques can now be passed through a machine called a reader-sorter by the bank processing any of the cheques with the number and symbols now being recognizable.

Magnetic material applicator 80 comprises a conventional fuser 88 mounted against the back of thin film 81. Film 81 comprises a heat resistant polyester film backing member 82, such as, Mylar with a layer of magnetite 83 adhered thereto and is positioned to contact sheets deflected in its direction by gate 56. The composition of magnetite layer 83 found to produce desired results preferably comprises iron oxide, carbon black, styrene, chlorinated rubber, mirasil and plastolein with each having a percent dried weight of 58.8, 6.4, 25.2, 7.3, 2.0 and 0.3, respectively. Film 81 is contained within a cassette 95 and wound up onto a take-up spool 84 and connected to a payout spool 85 at one end thereof after passing tensioning rollers 86 and 87, respectively, with fuser 88 being positioned between the two spools 84 and 85 facing the backing member 82 and opposite a backup roller 89. Sheets 35 with the codes and symbols desired to be magnetized are located directly below fuser 88 which heats and presses the film 81 against previously fused non-magnetic toner 36. The heat causes the magnetite that is directly over standard toner characters to release from the backing member 82 and adhere to the previously fused characters while the copy sheet continues en route toward an output tray 90 (Fig 1). It should be understood that this invention is also intended for use with a sensing system as disclosed in US-A-4,891,240 where the code to be magnetized would be sensed, a circular heating shoe rotating at the speed of the copy sheets would be brought into contact with the film 81 moving at the speed of the copy sheets and the shoe removed from the film once the code is sensed as having passed the magnetic medium loading point.

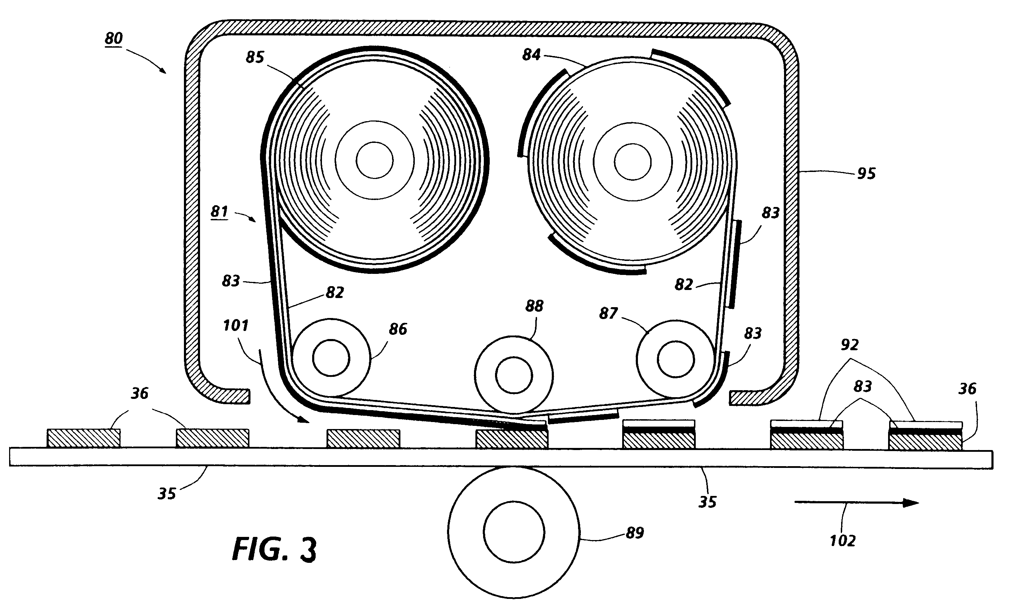

Figure 3 shows how the the applicator 80 is used to apply a highly reflective, colored, layer to the sheets 35 in addition to the magnetic material. In this case, film 81 comprises a heat resistant polyester film backing member 82, such as Mylar, with a highly reflective, colored layer 92 and a layer of magnetite 83 adhered thereto and is positioned to contact sheets deflected in its direction by gate 56. Any pigment dispersed in a resin could be used as the color layer, for example, for magenta, Hostaperm pink E (available from Hoechst Chemicals) in a resin like styrene could be used together with fine particles of a transition metal dispersed therein.

In practice, a printer add-on subsystem or standalone product 80 will selectively apply color using thermal transfer material 81 to some portion of, for example, a check, such as, a bank or corporate logo, amount of the check, payee of the check, etc. A highly reflective image results which has unique reflective characteristics making it very difficult to reproduce using color copier technology. In addition to the color, the high reflectivity of the color serves to increase the difficulty of fraudulent document creation or tampering. Also, due to the highly reflective surface, cheques made in this manner are easily fed past optical readers, microfilmers and image capture systems.

Any number of commercially available products can be used as a forgery prevention tool when preparing documents that do not have a MICR requirement. For example, material marketed by Letraset Corporation under the trade name Color Tag System could be used. Letraset markets a family of color transfer materials which transfer to heat absorbing images of the type resulting from non-impact printing systems. Application of hard-to-produce color will make it easier to differentiate between actual cheques and forged look alikes in the check processing industry, and will also make it harder to change the content of areas so treated.

It should be understood that multiple lines of coded material could be magnetized with the present magnetizing process by including multiple cassettes of tape positioned as desired. Further, while the magnetic media applicator 80 is disclosed herein as an on-line device, i.e., one that is connected to and accepts sheets from a copier/printer as they leave the copier/printer, one can readily see that the magnetic media applicator is adaptable to off-line use as well. In short, the magnetic media applicator 80 is adaptable for both on-line and off line applications and provides magnetic ink character readable images, which may also be colored, on demand.

In recapitulation, it is evident that the apparatus in the embodiment described above applies a magnetic material, or a magnetic material plus a colored highly reflective material, to non-magnetic toned images by heating one surface of a film containing a layer of magnetite material and pressing the opposite surface of the film onto the non-magnetic toned image, whereby only the desired image characters are magnetized resulting in a lower cost and more efficient MAGNETIC INK CHARACTER RECOGNITION system. Application of a hard-to-reproduce color to a document with the present invention will make it easy to differentiate between actual cheques and forged look alikes, and will also make it harder to change the content of areas so treated through alterations.

It is therefore, apparent that there has been provided, in accordance with an embodiment of the present invention, an apparatus for applying MAGNETIC INK CHARACTER RECOGNITION material, and optionally a colored highly reflective material, to xerographic images within a printing machine as a function thereof. This apparatus fully satisfies the aims and advantages hereinbefore set forth. While this invention has been described in conjunction with a specific embodiment thereof, it is evident that many alternatives, modifications, and variations will be apparent to those skilled in the art. Accordingly, it is intended to cover all such alternatives, modifications, and variations as fall within the scope of the appended claims.

## Claims

1. A method of providing MICR images on a substrate having permanent non-magnetic or substantially non-magnetic, images on a surface thereof, characterised by fusing a magnetic material (83) on top of said non-magnetic, or substantially non-magnetic, images.

2. A method as claimed in claim 1 including also fusing a colored material (92) on top of said images.

3. A method as claimed in claim 1, for creating MICR readable images out of previously fused non-magnetic or substantially non-magnetic images, characterised by providing a film (81) including a heat resistant backing member (82) with a coating layer comprising a magnetic material (83) and optionally a colored, highly reflective material (92) adhered thereto, providing heating means (88) adjacent said backing member (82), moving said substrate containing permanent non-magnetic, or substantially non-magnetic, images on a surface thereof into contact with said backing member (82), pressing said coating layer against predetermined portions of said permanent non-magnetic, or substantially non-magnetic, images, and heating said coating layer with said heater means (88) in order to cause thereby said coating layer to fuse to said permanent non-magnetic, or substantially non-magnetic, images and thereby render the resultant images readable by MICR readers.

4. A cassette for use in an apparatus for creating images readable by a MICR reader-sorter, characterised in that the cassette (95) contains a first substrate (81) having a coating layer comprising a heat releasable magnetic material (83) and a colored, highly reflective material (92) attached thereto, said heat releasable magnetic material being adapted to transfer, upon application of heat and pressure thereto, to permanent non-magnetic, or substantially non-magnetic, toned images on a second, separate, substrate.

5. An apparatus for creating images readable by a MICR reader-sorter, characterised by a first substrate (81) having a coating layer comprising a heat releasable magnetic material (83) and optionally a colored, highly reflective material (92) attached thereto, and fuser means (88, 89) for heating and pressing said coating layer onto permanent non-magnetic, or substantially non-magnetic, toned images of a second separate substrate in order to thereby cause said coating layer to fuse to said permanent non-magnetic, or substantially non-magnetic, images of said second substrate and thereby render the resultant images readable by a MICR reader-sorter.

6. An apparatus as claimed in claim 5, characterised in that said fuser means (88, 89) includes a fuser roller (88) and a backup roller (89), and wherein said fuser roller (88) is positioned adjacent said heat resistant backing layer (82) of said film (81).

7. An apparatus as claimed in claim 5 or claim 6, characterised in that said first substrate is a film positioned within a cassette (95)

8. An apparatus as claimed in claim 7, characterised in that said cassette (85) is adapted to position said film (81) to contact said second substrate only at a predetermined location.

9. An apparatus as claimed in any one of claims 5 to 8, characterised in that said apparatus is part of an electrophotographic printing apparatus of the type in which a non-magnetic, or substantially non-magnetic, toner image is transferred to a copy substrate from a photoconductive member (10).

10. An electrophotographic printing apparatus of the type in which a non-magnetic, or substantially non-magnetic, toner image is transferred to a copy substrate from a photoconductive member (10) and fused thereto, characterised by a film (81) including a heat resistant backing member (82) and a coating layer comprising a magnetic material (83) and optionally a colored, highly reflective, material (92) adhered thereto, and heating means (88) positioned adjacent said backing member (82) and adapted to contact said backing member (82) and press said coating layer against predetermined portions of said fused non-magnetic or substantially non-magnetic, images in order to heat the same and thereby cause said coating layer to fuse to said fused non-magnetic, or substantially non-magnetic, images and thereby render the resultant images readable by MICR readers.

## Patentansprüche

1. Verfahren zum Schaffen von MICR-Abbildern an einem Substrat, das permanente nichtmagnetische oder im wesentlichen nichtmagnetische Abbilder an einer seiner Oberflächen trägt, **gekennzeichnet** durch Schmelz-Befestigen eines Magnetmaterials (83) auf der Oberseite der nichtmagnetischen oder im wesentlichen nichtmagnetischen Abbilder.

2. Verfahren nach Anspruch 1, das auch das Schmelz-Befestigen eines Farbmaterials (92) auf der Oberfläche der Abbilder umfaßt.

3. Verfahren nach Anspruch 1 zum Schaffen von MICR-lesbaren Bildern aus vorher schmelzbefestigten nichtmagnetischen oder im wesentlichen nichtmagnetischen Abbildern, **gekennzeichnet** durch Schaffen eines Films (81), der enthält ein wärmebeständiges Stützteil (82) mit einer daran angehängten ein magnetisches Material (83) und wahlweise ein gefärbtes hochreflektives Material (92) umfassenden Beschichtung, Schaffen von Heizermitteln (88) benachbart dem Stützteil (82), Bewegen des permanente nichtmagnetische oder im wesentlichen nichtmagnetische Abbilder an seiner einen Oberfläche tragenden Substrats in Berührung mit dem Stützteil (82), Andrücken der Beschichtung gegen vorbestimmte Abschnitte der permanenten nichtmagnetischen oder im wesentlichen nichtmagnetischen Abbilder und Erwärmen der Deckschicht mit dem Heizermittel (88), um dadurch die Deckschicht zur Schmelzbefestigung auf den permanenten nichtmagnetischen oder im wesentlichen nichtmagnetischen Abbildern zu veranlassen und dadurch die sich ergebenden Bilder für MICR-Lesegeräte lesbar zu machen.

4. Kassette zur Verwendung in einer Vorrichtung zum Schaffen von für einen MICR-Leser/Sortierer lesbaren Abbildern, **dadurch gekennzeichnet,** daß die Kassette (95) ein erstes Substrat (81) mit einer daran angebrachten Deckschicht enthält, welche ein wärmeablösbares Magnetmaterial (83) und ein gefärbtes hochreflektives Material (92) enthält, wobei das wärmeablösbare Magnetmaterial ausgelegt ist, sich bei Anwendung von Wärme und Druck auf permanente nichtmagnetische oder im wesentlichen nichtmagnetische Toner-Abbilder an einem zweiten separaten Substrat zu übertragen.

5. Vorrichtung zum Schaffen von für einen MICR-Leser/Sortierer lesbaren Abbildern, **gekennzeichnet durch** ein erstes Substrat (81) mit einer daran angebrachten Deckschicht, die wärmeablösbares Magnetmaterial (33) und wahlweise ein gefärbtes hochreflektives Material (92) umfaßt, und Schmelzbefestigermittel (88, 89) zum Aufheizen und Anpressen der Deckschicht an permanente nichtmagnetische oder im wesentlichen nichtmagnetische Toner-Abbilder an einem zweiten separaten Substrat, um dadurch die Deckschicht zum Schmelzbefestigen an den permanenten nichtmagnetischen oder im wesentlichen nichtmagnetischen Abbildern an dem zweiten Substrat zu veranlassen und dadurch die sich ergebenden Abbilder für einen MICR-Leser/Sortierer lesbar zu machen.

6. Vorrichtung nach Anspruch 5, **dadurch gekennzeichnet,** daß das Schmelzbefestigermittel (88, 89) eine Schmelzwalze (88) und eine Abstützwalze (89) umfaßt, und daß die Schmelzwalze (88) benachbart zur wärmebeständigen Stützschicht (82) des Films (81) angeordnet ist.

7. Vorrichtung nach Anspruch 5 oder 6, **dadurch gekennzeichnet,** daß das erste Substrat ein in einer Kassette (95) angebrachter Film ist.

8. Vorrichtung nach Anspruch 7, **dadurch gekennzeichnet,** daß die Kassette (85) ausgelegt ist, den Film (81) nur an einem vorbestimmten Ort mit dem zweiten Substrat in Berührung zu bringen.

9. Vorrichtung nach einem der Ansprüche 5 bis 8, **dadurch gekennzeichnet,** daß die Vorrichtung ein Teil einer elektrophotographischen Druckvorrichtung des Typs ist, bei dem ein nichtmagnetisches oder im wesentlichen nichtmagnetisches Tonerabbild von einem photoleitenden Teil (10) auf ein Kopiersubstrat übertragen wird.

10. Elektrophotographische Druckvorrichtung des Typs, bei dem ein nichtmagnetisches oder im wesentlichen nichtmagnetisches Tonerabbild von einem photoleitenden Teil (10) auf ein Kopiersubstrat übertragen und an dem Substrat schmelzbefestigt wird, **gekennzeichnet durch** einen Film (81), der ein wärmebeständiges Stützteil (82) und eine daran angehängte, Magnetmaterial (83) und wahlweise ein gefärbtes hochreflektives Material (92) enthaltende Deckschicht umfaßt, und durch Heizermittel (88), die benachbart dem Stützteil (82) angesetzt und dazu ausgelegt sind, das Stützteil (82) zu berühren und die Deckschicht gegen vorbestimmte Abschnitte der schmelzbefestigten nichtmagnetischen oder im wesentlichen nichtmagnetischen Abbilder zu drücken, um sie aufzuheizen und dadurch die Deckschicht zur Schmelz-Befestigung an den schmelzbefestigten nichtmagnetischen oder im wesentlichen nichtmagnetischen Abbildern zu bringen und dadurch die sich ergebenden Abbilder für MICR-Leser lesbar zu machen.

## Revendications

1. Procédé pour fournir des images MICR sur un substrat ayant sur sa surface des images amagnétiques ou sensiblement amagnétiques, permanentes, caractérisé par la fusion d'un matériau magnétique (83) sur le dessus desdites images amagnétiques, ou sensiblement amagnétiques.

2. Procédé selon la revendication 1, comprenant aussi la fusion d'un matériau coloré (92) sur le dessus desdites images.

3. Procédé selon la revendication 1, pour créer des images lisibles en MICR au sein d'images amagnétiques ou sensiblement amagnétiques, ayant été précédemment fixées par fusion, caractérisé par la fourniture d'un film (81) comprenant un élément dorsal résistant à la chaleur (82) avec une couche de revêtement comportant un matériau magnétique (83) et en option un matériau coloré, extrêmement réfléchissant (92) y adhérant, la fourniture d'un moyen de chauffage (88) contigu audit élément dorsal (82), le déplacement dudit substrat contenant des images amagnétiques, ou sensiblement amagnétiques, permanentes sur sa surface pour les mettre en contact avec ledit élément dorsal (82), la compression de ladite couche de revêtement contre des parties prédéterminées desdites images amagnétiques, ou sensiblement amagnétiques, permanentes, et le chauffage de ladite couche de revêtement avec ledit moyen de chauffage (88) de façon à ce que ladite couche de revêtement se fixe par fusion auxdites images amagnétiques, ou sensiblement amagnétiques, permanentes, et ainsi que les images obtenues puissent être lues par des lecteurs MICR.

4. Cassette pour emploi dans un dispositif pour créer des images lisibles par lecteur-trieuse MICR, caractérisé en ce que la cassette (95) contient un premier substrat (81) ayant une couche de revêtement constituée d'un matériau magnétique libérable par la chaleur (83) et d'un matériau coloré, extrêmement réfléchissant (92) y adhérant, ledit matériau magnétique libérable par la chaleur étant destiné à être transféré, lorsqu'il est soumis à l'application de chaleur et d'une pression, à des images teintées amagnétiques, ou sensiblement amagnétiques, permanentes, sur un second substrat, séparé.

5. Dispositif pour créer des images visibles par un lecteur-trieuse MICR, caractérisé par un premier substrat (81) ayant une couche de revêtement comportant un matériau magnétique libérable par la chaleur (83) et en option un matériau coloré, extrêmement réfléchissant (92) y adhérant, et un moyen de fusion (88, 89) pour chauffer et comprimer ladite couche de revêtement sur les images teintées amagnétiques, ou sensiblement amagnétiques, permanentes, d'un second substrat séparé de façon à provoquer la fusion de ladite couche de revêtement sur lesdites images amagnétiques, ou sensiblement amagnétiques, permanentes, dudit second substrat et rendre ainsi lisibles les images obtenues par un lecteur-trieuse MICR.

6. Dispositif selon la revendication 5, caractérisé en ce que ledit moyen de fusion (88, 89) comprend un rouleau de fusion (88) et un rouleau d'appui (89), et dans lequel ledit rouleau de fusion (88) est placé dans le voisinage de ladite couche dorsale résistant à la chaleur (82) dudit film (81).

7. Dispositif selon la revendication 5 ou la revendication 6, caractérisé en ce que ledit premier substrat est un film placé à l'intérieur d'une cassette (95).

8. Dispositif selon la revendication 7, caractérisé en ce que ladite cassette (85) est destinée à positionner ledit film (81) de manière à ce qu'il soit en contact avec ledit second substrat seulement à un emplacement prédéterminé.

9. Dispositif selon l'une quelconque des revendications 5 à 8, caractérisé en ce que ledit dispositif fait partie d'un appareil d'impression électrophotographique du type dans lequel une image en toner amagnétique, ou sensiblement amagnétique, est transférée à un substrat de copie à partir d'un élément photoconducteur (10).

10. Appareil d'impression électrophotographique du type dans lequel une image en toner amagnétique, ou sensiblement amagnétique, est transférée à un substrat de copie à partir d'un élément photoconducteur (10) et fixée par fusion à celui-ci, caractérisé par un film (81) comprenant un élément dorsal résistant à la chaleur (82) et une couche de revêtement comportant un matériau magnétique (83) et en option un matériau coloré, extrêmement réfléchissant (92) y adhérant, et un moyen de chauffage (88) placé dans le voisinage dudit élément dorsal (82) et destiné à être en contact avec ledit élément dorsal (82) et à comprimer ladite couche de revêtement contre des parties prédéterminées desdites images amagnétiques ou sensiblement amagnétiques, fixées par fusion, de manière à les chauffer et faire ainsi en sorte que ladite couche de revêtement fonde sur lesdites images amagnétiques, ou sensiblement amagnétiques, fixées par fusion, et rendre ainsi les images obtenues lisibles par des lecteurs MICR.
